Europäisches Patentamt

European Patent Office

Office européen des brevets

(19)

(11) Veröffentlichungsnummer: **0 167 986**
A2

(12) # EUROPÄISCHE PATENTANMELDUNG

(21) Anmeldenummer: 85108268.5

(22) Anmeldetag: 04.07.85

(51) Int. Cl.⁴: **F 16 L 55/12**

(30) Priorität: 12.07.84 DE 3425640

(43) Veröffentlichungstag der Anmeldung:
15.01.86 Patentblatt 86/3

(84) Benannte Vertragsstaaten:
AT BE CH DE FR GB IT LI LU NL SE

(71) Anmelder: WAF GmbH Absperrgeräte und Apparatebau
Zum Riegel 15
D-6720 Speyer(DE)

(72) Erfinder: Seiberth, Arno
1. Gartenweg 28
D-6720 Speyer(DE)

(74) Vertreter: Weiss, Ursula, Dr.
Gluckstrasse 3
D-6800 Mannheim 1(DE)

(54) Vorrichtung zum vorübergehenden Absperren von unter Druck stehenden Rohren.

(57) Die Erfindung betrifft eine Vorrichtung zum vorübergehenden Absperren von unter Druck stehenden Rohren, die einen flexiblen Schlaych 6 und eine elastische Kugel 11 aufweist. Die elastische Kugel 11 ist mittels einer Spannvorrichtung verformbar.

EP 0 167 986 A2

./...

Figur 1

**Dr. Ursula Weiss**
Patentanwältin

Gluckstraße 3
6800 Mann04167986
Telefon 06 21 / 44 21 27

Anmelder: Firma
WAF GmbH Absperrgeräte und Apparatebau
Zum Riegel 15
6720 Speyer


## VORRICHTUNG ZUM VORÜBERGEHENDEN ABSPERREN VON UNTER DRUCK STEHENDEN ROHREN


Die Erfindung betrifft eine Vorrichtung zum vorübergehenden Absperren von unter Druck stehenden Rohren.

Will man Rohre, die unter Druck stehen, vorübergehend absperren, so sind starre Geräte bekannt, mit denen es auf mannigfache Weise möglich ist, die betreffenden Rohre abzusperren. Der Nachteil dieser Geräte besteht jedoch darin, daß gebogene oder gekrümmte Rohre nur durch komplizierte Handhabungen abgesperrt werden können.

Die der vorliegenden Erfindung zugrunde liegende Aufgabe besteht darin, ein Absperrgerät vorzuschlagen, mit dem es auf einfache Weise möglich ist, unter Druck stehende Rohre vorübergehend abzusperren, insbesondere gebogene oder gekrümmte Rohre.

- 2 -

Diese Aufgabe wird erfindungsgemäß dadurch gelöst,
daß das Absperrgerät einen flexiblen Schlauch und
eine elastische Kugel aufweist, die mittels einer
Spannvorrichtung verformbar ist.

Will man ein Rohr absperren, so bringt man das Ende
des Gerätes, an dem sich die elastische Kugel befindet, in das Rohr bis zu der gewünschten Stelle.
Der flexible Schlauch ermöglicht das Einführen der
Kugel auch in gebogene oder gekrümmte Rohre. Befindet sich die Kugel an der gewünschten Stelle, so
ist es möglich, durch Betätigung der Spannvorrichtung die Kugel derart zu verformen, daß sie sich
an den Rohrdurchmesser anpaßt und fest an ihrem Ort
bleibt, auch wenn das Rohr unter Druck steht.

Mit dem erfindungsgemäßen Gerät ist es demgemäß möglich, Rohre, die aus den verschiedensten Materialien
bestehen, vorübergehend abzusperren. Dies ist sowohl bei Flüssigkeiten, Gasen als auch bei Ölen möglich. Durch die Verwendung des flexiblen Schlauches
ist das Absperren von Rohrleitungen "um die Kurve",
d. h. bei gebogenen oder gekrümmten Rohren, einfach und problemlos von innen möglich.

Durch diese Erfindung ist es ferner möglich, Erneuerungsarbeiten, Druckproben, Reinigungsarbeiten
u. ä. an unter Druck stehenden Rohren zu praktizieren. Schieber, Muffen, T-Stücke, Ventile etc.
sind problemlos über das im Rohr befindliche Absperrgerät austauschbar.

Das Gerät erlaubt es ferner, an schwer zugänglichen
Stellen, wie beispielsweise in engen Schächten und
Kanälen, unter Wasser liegende Austrittsöffnungen,
wie beispielsweise in Schwimmbädern, oder senkrecht
stehende Rohre, wie Heizungs- oder Abwasserrohre,
vor der Leckstelle abzudichten.

Die Geräte dienen zum Verschließen, Prüfen, Abdichten,
Spülen, Druck prüfen etc., zum Austausch von Formstücken unter Gegendruck bei Gas-Wasser-Öl, chemischen
Flüssigkeiten oder Gasen aller Art, oder Gemische
derselben, in biegsamen Leitungen, Rohren (rund, oval
oder quadratisch) Absperrleitungen um Kurven, Bögen
aller möglichen Dimensionen über das Gerät hinweg.

Durch die Verwendung von feuerfesten Materialien ist
es ebenso möglich, an den zu verschließenden Rohrleitungen Schweiß- oder Lötarbeiten durchzuführen.

Gas- oder Wasserrohrbrüche können durch das Einschieben des Absperrgerätes direkt abgesperrt werden,
desweiteren Dampfleitungen oder Hydraulik- und Ölleitungen an schwer zugänglichen Stellen.

Die äußere Umhüllung, d. h. der flexible Schlauch,
besteht beispielsweise aus Gummi, biegsamen Rohr,
aus Kunststoffen verschiedener Art (monomere, polymere), stahlummantelte Gummi- oder Kunststoffschläuche, biegsame Stahlschäuche oder Hohlseile.

Vorzugsweise ist im Inneren des flexiblen Schlauches eine flexible Metallspirale angeordnet. Diese Spirale dient zur Stabilisierung des Schlauches und verhindert gegebenenfalls ein unerwünschtes Abknicken. Diese biegsame Innenwelle kann beispielsweise aus Stahlseil, reißfesten Kunststoffen wie Nylon, Perlon usw., hydraulische Leitungen und Schläuche, Hohlseile bestehen.

Gemäß einer weiteren besonders bevorzugten Ausführungsform weist die Spannvorrichtung einen Haltegriff und einen Ring auf, der über einen mit einem Gewinde versehenen Stab mit dem Haltegriff drehbar verbunden ist. Mit dieser Spannvorrichtung ist es möglich, auf einfache Weise die gewünschte Spannung zu erreichen. Durch Drehen des Ringes und gleichzeitiges Festhalten des Griffes wird der Abstand zwischen dem Ring und dem Haltegriff derart verändert, daß je nach der Drehrichtung eine Druckbe- oder -entlastung stattfindet. Selbstverständlich ist es auch möglich, eine hydraulisch bedienbare Spannvorrichtung zu verwenden. Die Innenwelle wird beispielsweise mittels metallischer Innenzugseile, durch Verlöten oder Verschweißen, Verschrauben oder durch ähnliche Steckverbindungen befestigt.

Gemäß einer weiteren besonders bevorzugten Ausführungsform verläuft im Inneren des Gerätes von einem Ende durch die Kugel und den Schlauch hindurch bis zum anderen Ende ein Zug- oder Spannseil oder ein Stahldraht, der mittels der Spannvorrichtung zugbelastbar ist. Diese Anordnung ermöglicht auf einfache Weise, durch Spannen des Stahldrahtes bzw. des Seiles eine Veränderung des Durchmessers der an einem Ende des Gerätes angeordneten Kugel. Das Griffstück zum Anziehen der Kugeln, ovaler Kugeln, zylindrischer oder konischer Walzen kann folgendermaßen beschrieben sein:

Das obere Teil ist gelagert durch Rollenlager, Kugellager aus Metall oder Kunststoffen, oder Kunststoffteilen,mit einem Handgriff zum Anziehen der obengenannten Körper, mit Anziehmuttern für Schraubenschlüssel, zum Auswechseln zu ersetzender Teile, mit Spezialschlüssel, mit Knebelgriff bzw. mit Rändelmutter, oder durch hydraulische oder pneumatische Einrichtungen, die die Wirkungsweise der rein mechanischen Teile ersetzen oder ergänzen.

Vorzugsweise besteht der flexible Schlauch aus einem feuer- und/oder chemikalienbeständigen Material. Für die Absperrung können alle dehnbaren oder verformbaren Materialien eingesetzt werden wie: Kugeln, oval geformte Kugeln, zylindrische und konische Walzen, Schläuche oder ähnliche Formstücke verschiedener Durchmesser, aus allen möglichen Gummimischungen, Elastomeren, Nylon, Perlon, Kunststoffen aller Art, chemikalienbeständige oder lebensmittelechte Materialien.

Vorzugsweise besteht die elastische Kugel aus Gummi. Es ist möglich, verschieden große Gummikugeln entsprechend dem Durchmesser der zu verschließenden Rohre zu verwenden. Dies sind auswechselbare Teile, je nach dem Durchmesser der zu verschließenden Werkstücke zum: Verschrauben, Verlöten, Verschweissen, Steckverbindungen, ebenfalls gelagert durch Kugelrollen oder Kunststofflager.

Die Geräte können in den Durchmessern 10 mm bis Durchmesser unendlich gefertigt werden, dadurch verändern sich die Dimensionen der Werkstoffe je nach Anforderung. Die Kugel ist beispielsweise mit einem Gewinderöhrchen oder einer Gewindestange anziehbar.

Die Erfindung wird nun anhand der beigefügten Zeichnungen näher erläutert.

Es zeigen:

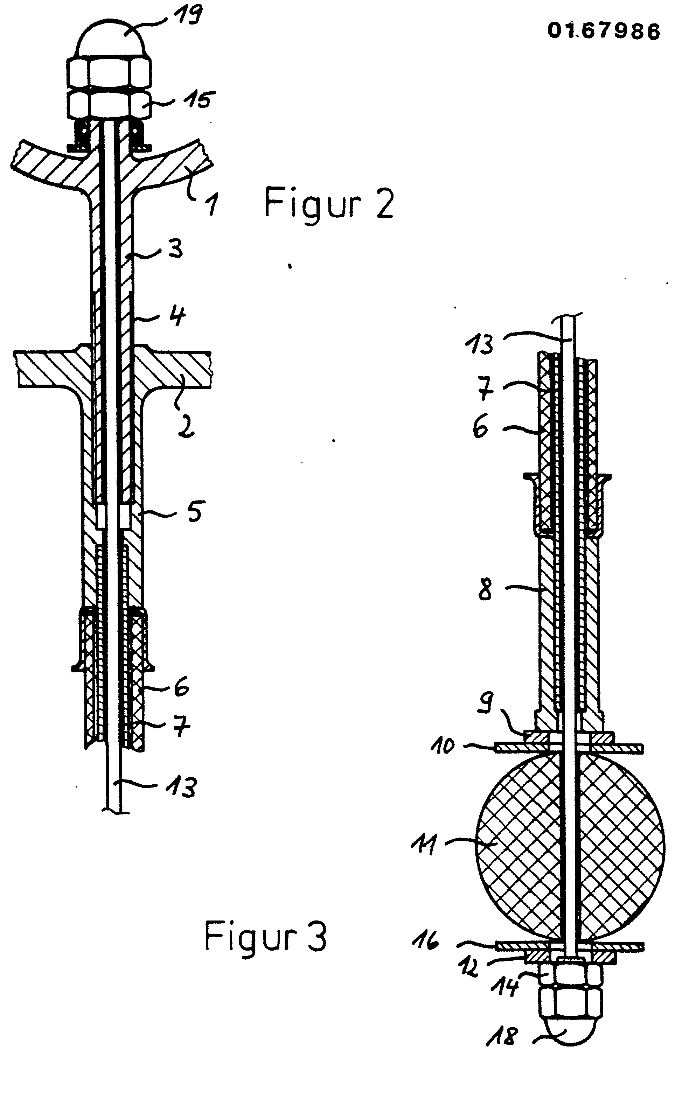

Figur 1 eine Ansicht des erfindungsgemäßen Gerätes, Figur 2 den Längsschnitt des oberen Teiles des erfindungsgemäßen Gerätes gemäß Figur 1 und

Figur 3 den Längsschnitt des unteren Teiles des in

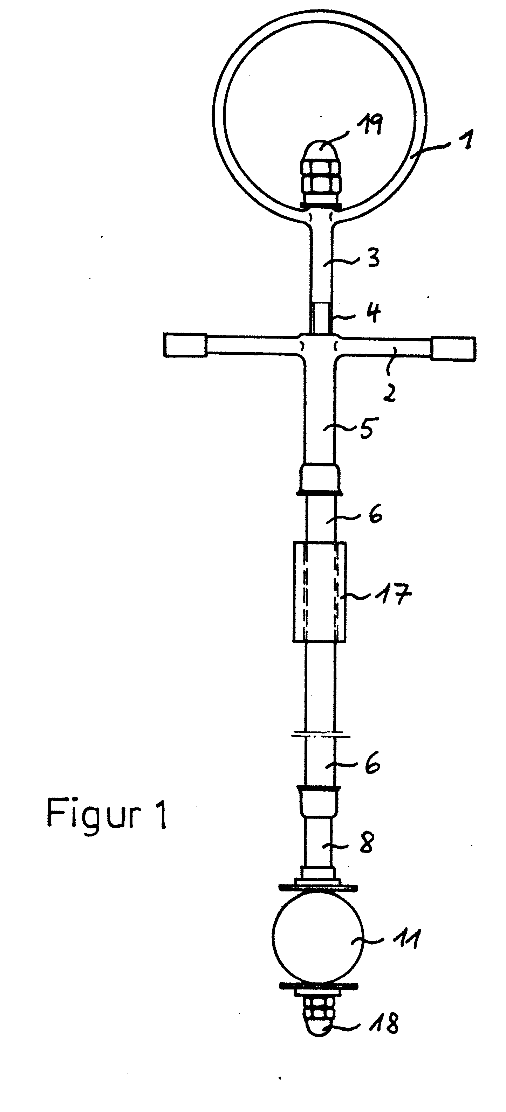

Figur 1 dargestellten Gerätes.

Das dargestellte Gerät zum vorübergehenden Absperren
von unter Druck stehenden Rohren weist am oberen
Ende 19 eine Spannvorrichtung auf, die im wesentlichen
aus dem Ring 1 und dem Haltegriff 2 besteht. Der Ring 1
ist über den Stab 3 mit dem Haltegriff 2 drehbar verbunden, wobei der Stab 3 das Gewinde 4 aufweist. Am
unteren Ende der stabförmigen Verlängerung 5 des
Haltegriffes 2 ist der flexible Schlauch 6 angeordnet.
Dieser flexible Schlauch 6 ist vorzugsweise aus einem
feuer- und chemikalienbeständigen Material hergestellt.
Im Inneren dieses flexiblen Schlauches 6 befindet
sich die flexible Metallspirale 7, deren oberes bzw.
unteres Ende über die betreffenden Enden des flexiblen
Schlauches 6 hinausragt. Am unteren Ende des flexiblen
Schlauches 6 befindet sich die Hülse 8, an die sich
über Scheiben 9 und 10 die Kugel 11 anschließt, die
an die Scheiben 16 und 12 angrenzt.

Im Innern des beschriebenen Gerätes erstreckt sich
der zugbelastbare Stahldraht 13, der an jedem Ende 18
bzw. 19 auf übliche Weise über die Muttern 14 bzw. 15
befestigt ist. Es ist möglich, anstelle des Stahldrahtes 13 ein Zug- oder Spannseil zu verwenden.

Die Kugel 11 kann auf an sich bekannte Weise gegen
eine andere Kugel mit einem anderen Durchmesser ausgewechselt werden, je nach dem Durchmesser des abzusperrenden Rohres. Die Kugeln bestehen vorzugsweise
aus Gummi.

Die Hülse 17 ist beweglich über der Oberfläche des Schlauches 6 angeordnet.

Hält man das erfindungsgemäße Gerät an dem Griff 2 fest und dreht den Ring 1 manuell, so verändert sich der Abstand zwischen dem Griff 2 und dem Ring 1. Hierdurch wird der im Innern des Gerätes befindliche Stahldraht 13 je nach Drehrichtung gespannt oder entlastet. Wird der Draht gespannt, so wird hierdurch die Gummikugel, durch deren Inneres der Draht führt, zwischen den Scheiben 10 und 16 zusammengepreßt und ihr Durchmesser wird etwas vergrößert.

Will man ein Rohr, das aus den verschiedensten Materialien bestehen kann und für Flüssigkeiten, Gase oder Öle vorgesehen ist, vorübergehend absperren, so ist es mit dem erfindungsgemäßen Gerät möglich, diese Rohrleitungen "um die Kurve" abzusperren, d. h. gebogene oder gekrümmte Rohre können einfach und problemlos von innen sicher verschlossen werden. Hierzu wird das Ende 18 des erfindungsgemäßen Gerätes, an dem die Kugel 11 angeordnet ist, in das Rohr eingeführt, wobei sich der flexible Schlauch 6 den Windungen des Rohres anpaßt. Befindet sich die Kugel 11 an der gewünschten Stelle des Rohres, so wird sie an dieser Stelle dadurch arretiert, daß durch Drehen des Ringes 1 und Festhalten des Griffes 2 der im Innern des Gerätes befindliche Stahldraht 13 gespannt wird. Durch dieses Spannen des Stahldrahtes 13 wird der Durchmesser der Kugel 11 etwas vergrößert, so daß ein fester Sitz im Innern des Rohres gewährleistet ist.

- 9 -

Durch dieses neue Prinzip ist es möglich, Erneuerungsarbeiten, Druckproben, Reinigungsarbeiten u. ä. an
unter Druck stehenden Rohren zu praktizieren. Schieber,
Muffen, T-Stücke, Ventile etc. sind problemlos über
das im Rohr befindliche Absperrgerät austauschbar.

Bei dem dargestellten Absperrgerät wird eine manuell
bedienbare Spannvorrichtung dargestellt. Es ist jedoch auch möglich, diese Spannvorrichtung durch eine
an sich bekannte hydraulisch wirkende Spannvorrichtung
zu ersetzen.

Bezugszeichenliste

1   Ring
2   Haltegriff
3   Stab
4   Gewinde
5   stabförmige Verlängerung
6   Schlauch
7   Metallspirale
8   Hülse
9   Scheibe
10  Scheibe
11  Kugel
12  Scheibe
13  Stahldraht
14  Mutter
15  Mutter
16  Scheibe
17  Hülse
18  Ende
19  Ende

Dr. Ursula Weiss
Patentanwältin

Gluckstraße 3
6800 Mannheim 1
Telefon 0621/441212

0167986

Ansprüche

1. Vorrichtung zum vorübergehenden Absperren von unter Druck stehenden Rohren, dadurch gekennzeichnet, daß sie einen flexiblen Schlauch (6) und eine elastische Kugel (11) aufweist, die mittels einer Spannvorrichtung verformbar ist.

2. Vorrichtung nach Anspruch 1, dadurch gekennzeichnet, daß im Inneren des flexiblen Schlauches (6) eine flexible Metallspirale (7) angeordnet ist.

3. Vorrichtung nach Anspruch 1 oder 2, dadurch gekennzeichnet, daß die Spannvorrichtung einen Haltegriff (2) und einen Ring (1) aufweist, der über einen mit einem Gewinde (4) versehenen Stab (3) mit dem Haltegriff (2) drehbar verbunden ist.

4. Vorrichtung nach Anspruch 1, 2 oder 3, dadurch gekennzeichnet, daß im Inneren des Gerätes von einem Ende (18) durch die Kugel (11) und den Schlauch (6) hindurch bis zum anderen Ende (19) ein Zug- oder Spannseil oder ein Stahldraht (13) verläuft, der mittels der Spannvorrichtung zugbelastbar ist.

5. Vorrichtung nach mindestens einem der vorherigen Ansprüche, dadurch gekennzeichnet,

daß der flexible Schlauch (6) aus einem feuer- und/oder chemikalienbeständigen Material besteht.

6. Vorrichtung nach mindestens einem der vorherigen Ansprüche,
dadurch gekennzeichnet,
daß die elastische Kugel aus Gummi besteht.

Figur 1

01.67986

Figur 2

Figur 3